# EUROPÄISCHE PATENTSCHRIFT

(11) **EP 3 033 547 B1**
(45) Veröffentlichungstag und Bekanntmachung des Hinweises auf die Patenterteilung: **27.03.2019**
(21) Anmeldenummer: 14747046.2
(22) Anmeldetag: 04.08.2014
(51) Int. Cl.: F16H 25/22, F16D 65/18, F16D 65/14, F16D 125/36, F16D 125/24, B60T 13/74

(54) **KOMBINIERTE FAHRZEUGBREMSE MIT EINEM KUGELGEWINDEGETRIEBE**
COMBINED VEHICLE BRAKE WITH A BALL SCREW DRIVE
FREIN DE VÉHICULE COMBINÉ MUNI D'UN SYSTÈME DE VIS À BILLES

(30) Priorität: 16.08.2013 DE 102013216327
(43) Veröffentlichungstag der Anmeldung: 22.06.2016
(73) Patentinhaber: Continental Teves AG & Co. OHG, 60488 Frankfurt am Main (DE)
(72) Erfinder: WINKLER, Thomas, 55131 Mainz (DE); FÜLLER, Dieter, 64569 Nauheim (DE); HESS, Thomas, 64342 Seeheim-Jugenheim (DE); WALTER, Patrick, 63075 Offenbach am Main (DE); BAUER, Jürgen, 65187 Wiesbaden (DE); VÖLKEL, Jürgen, 60389 Frankfurt am Main (DE)
(86) Internationale Anmeldenummer: PCT/EP2014/066736
(87) Internationale Veröffentlichungsnummer: WO 2015/022224

(56) Entgegenhaltungen:
- EP-A1- 0 552 858
- DE-A1- 3 643 775
- DE-A1-102007 042 654
- DE-A1-102007 046 180
- DE-A1-102009 012 235
- DE-A1-102009 019 793
- DE-A1-102009 051 123
- DE-U- 7 340 029
- GB-A- 1 302 836
- JP-A- S5 572 931
- US-A- 1 905 039

## Beschreibung

Die vorliegende Erfindung betrifft eine kombinierte Fahrzeugbremse mit einem Kugelgewindegetriebe, die eine hydraulisch betätigbare Betriebsbremse und eine elektromechanisch betätigbare Feststellbremsvorrichtung aufweist, wobei in einem Bremsgehäuse ein hydraulischer Betriebsdruckraum von einem Bremskolben begrenzt ist, der zur Durchführung von Betriebsbremsungen mit hydraulischem Druckmittel beaufschlagbar ist, so dass der Bremskolben zur Erzielung einer Bremswirkung entlang einer Kolbenlängsachse betätigbar ist, und wobei die Feststellbremsvorrichtung auf den Bremskolben mittels eines Getriebes wirkt, indem das Getriebe die Rotationsbewegung eines elektromechanischen Aktuators in eine Translationsbewegung umsetzt und eine Betätigung des Bremskolbens zur Durchführung von Feststellbremsvorgängen bewirkt und in der betätigten Stellung hält, wobei das Getriebe eine Gewindespindel und eine Gewindemutter aufweist, die über mehrere Wälzkörper miteinander in Kontakt stehen, wobei ein Schraubenfederelement vorgesehen ist, das bei einem lastfreien Betätigen des Getriebes ein Rutschen der Wälzkörper ermöglicht und bei einem Betätigen des Getriebes unter Last ein Abrollen der Wälzkörper bewirkt.

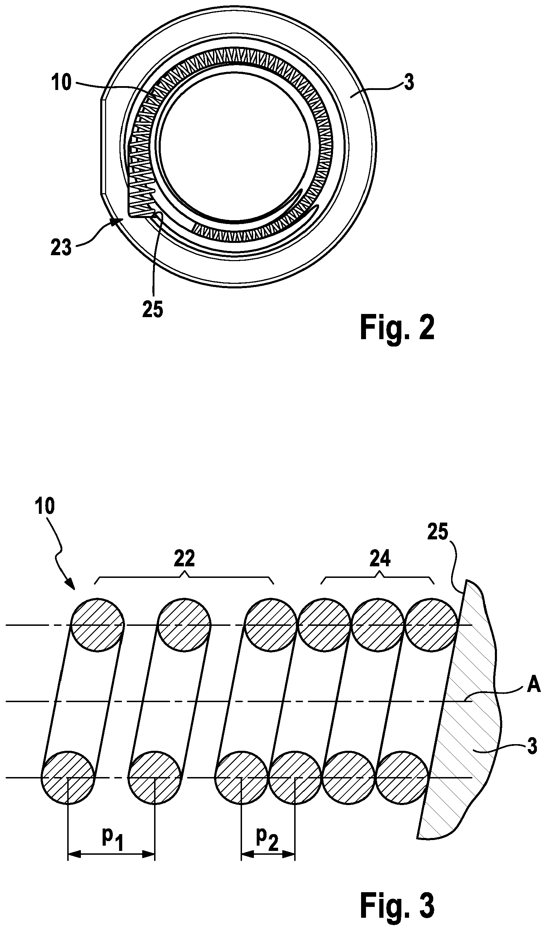

Eine derartige hydraulische Fahrzeugbremse mit elektrisch betätigbarer Feststellbremsvorrichtung ist aus der DE 10 2009 019 793 A1 bekannt und umfasst ein Wälzkörpergewindegetriebe mit Spindel, Mutter sowie mit Wälzkörpern (Kugeln), die zwischen zwei Anschlägen im Gewindegang begrenzt beweglich angeordnet sind, wobei ein Schraubenfederelement zum Vorhalten einer Wälzweges für die Wälzkörper 4 zwischen dem jeweils endseitigen Wälzkörper und einem Anschlag angeordnet ist. Der Anschlag ist als taschenförmige Vertiefungen ausgebildet und setzt sich ausgehend vom Gewindegang der Gewindemutter tangential fort. Die taschenförmige Vertiefung endet in einer senkrechten Anschlagfläche, an der sich das Schraubenfederelement abstützt, wie insbesondere die Fig. 2 illustriert. Die Montage eines weitgehend miniaturisierten Kugelgewindegetriebes aus vielen Komponenten einschließlich Wälzkörpern und SchraubenSchraubenfedern in einem gekrümmten Gewindegang zwischen einer Spindel und einer Mutter ist nicht trivial. Die vorliegende Erfindung beruht daher auf der Aufgabe, sowohl die Betriebsfunktion als auch die Prozesssicherheit bei der Montage eines gattungsgemäßen mehrstückigen Kugelgewindegetriebes zu verbessern, eine einfache automatisierte Montage zu ermöglichen, und nebenher die Möglichkeit zu eröffnen, Taktzeiten zu erhöhen.
Die Aufgabe wird im Prinzip mit einem abschnittsweise unterschiedlich gestalteten Schraubenfederelement erhalten, indem in einem Mittelabschnitt, also im Getriebegewindegang, Mittel vorgesehen sind, welche die elastisch-nachgiebige Anpassung der Schraubenfeder an den schraubenförmig gewundenen Gewindegang im Wesentlichen nicht behindern, und wobei zusätzlich an wenigstens einem Ende der Schraubenfeder ein Anlageabschnitt vorgesehen ist, der im Vergleich zum Mittelabschnitt, eine erhöhte Quersteifigkeit aufweist oder aufgeprägt erhält.
Eine bevorzugte Variante der Erfindung besteht darin, dass der Anlageabschnitt Windungen aufweist, die mit wenigstens zwei unterschiedlich ausgebildeten Schraubenfedersteigungen p1 und p2 ausgerüstet sind. Insbesondere können mehrere Schraubenfederwindungen mit reduzierter Steigung insbesondere auf Block, also ohne oder zumindest mit wenig Abstand zueinander, gewickelt sein, während daran anschließende Schraubenfederwindungen eine erhöhte Steigung aufweisen. Durch diese Maßnahmen wird eine Stützwirkung erzielt. Eine günstige Wirkung wird weiterhin erzielt, wenn ein letzter Gewindegang einer Windung angeschliffen ist, so dass eine zentrische Krafteinleitung und Abstützung ermöglicht ist. Es ist weiterhin möglich, dass an Stelle von einem Anschliff vom Federelement eine geneigte Auflagefläche vorgesehen ist, welche beispielsweise durch Deformation, Prägung oder ähnlichem erhalten werden kann. Weiterhin vorzugsweise kann das Federelement plastisch vorgeprägt sein, also die Doppelwendelform aufweisen.

Die Erfindung wird nachfolgend anhand eines Ausführungsbeispiels im Zusammenhang mit der beiliegenden Zeichnung näher erläutert. In der Zeichnung zeigt:
- Fig. 1+2: Schnittdarstellung einer Fahrzeugbremse mit hydraulisch betätigbarer Betriebsbremse und elektromechanisch betätigbarer Feststellbremse sowie eine zugehörige Gewindemutter gemäß DE 10 2009 019 793 A1;
- Fig. 3-6: erfindungsgemäße Ausführungsformen für eine neue Schraubenfeder-/Mutteranordnung und wobei das Federelement unterschiedliche Abschnitte aufweist, und
- Fig. 7: Einbausituation einer erfindungsgemäßen Schraubenfeder

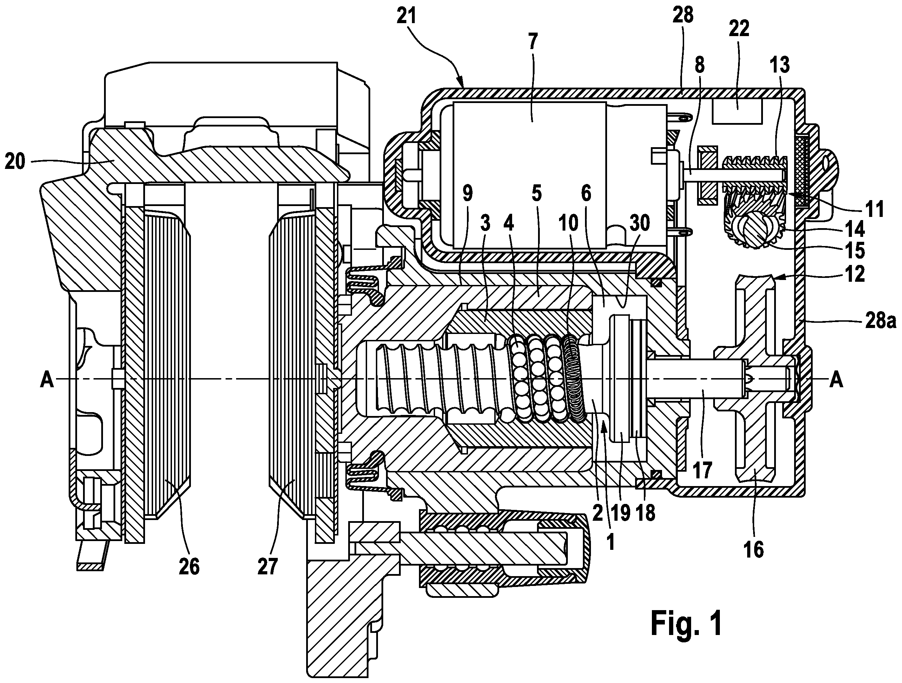

Die in Fig. 1 dargestellte hydraulische Fahrzeugbremse weist einerseits eine hydraulisch betätigbare Betriebsbremse und andererseits eine elektromechanisch betätigbare Feststellbremse auf. Die Fahrzeugbremse ist im gezeigten Beispiel als Schwimmsattel-Scheibenbremse ausgeführt, deren durch eine hydraulische Betätigung hervorgerufene Funktion dem auf diesem Gebiet tätigen Fachmann wohlbekannt ist und deswegen nicht näher erläutert zu werden braucht. Der Betätigung der Feststellbremse dient ein elektromechanischer Aktuator 7 bzw. Elektromotor 7, der zusammen mit einem zweistufigen Getriebe, der erforderlichen Sensorik sowie einer elektronischen Steuereinheit 22 in einem Antriebsmodul 21 integriert ist. Die oben erwähnte Fahrzeugbremse weist weiterhin ein Bremsgehäuse bzw. einen Bremssattel 20 auf, welcher den äußeren Rand einer nicht dargestellten Bremsscheibe und zwei auf beiden Seiten der Bremsscheibe angeordnete Bremsbeläge 26, 27 umgreift. Das Bremsgehäuse 20 bildet auf seiner Innenseite einen Bremszylinder 9, der einen Bremskolben 5 axial verschiebbar aufnimmt. In den zwischen Bremszylinder 9 und Bremskolben 5 gebildeten Betriebsdruckraum 6 kann zur Durchführung von Betriebsbremsungen Bremsflüssigkeit zugeführt werden, so dass sich ein Bremsdruck aufbaut, der den Bremskolben 5 axial entlang einer Kolbenlängsachse A zur Bremsscheibe hin verschiebt. Dadurch wird der dem Bremskolben 5 zugewandte Bremsbelag 27 gegen die Bremsscheibe gedrückt, wobei als Reaktion das Bremsgehäuse 20 sich in der entgegen gesetzten Richtung verschiebt und dadurch auch den anderen Bremsbelag 26 gegen die Bremsscheibe drückt.

Wie bereits erwähnt wurde, ist eine Feststellbrems-Vorrichtung zur Durchführung von Feststellbremsvorgängen elektromechanisch betätigbar und wirkt ebenfalls auf den Bremskolben 5. Dazu ist ein Getriebe 1 vorgesehen, das die Rotationsbewegung des elektromechanischen Aktuators 7 bzw. Elektromotors 7 in eine Translationsbewegung umsetzt und eine Betätigung des Bremskolbens 5 entlang der Achse A bewirkt. Das Getriebe 1 wird im Wesentlichen durch eine Gewindespindel 2 und eine Gewindemutter 3 gebildet, die über Wälzkörper 4 miteinander in Verbindung stehen. Die Wälzkörper 4 sind als Kugeln ausgebildet. Ein mit der Gewindespindel 2 verbundener Schaft 17 ragt an der der Bremsscheibe abgewandten Seite aus dem Bremsgehäuse 20 heraus und wird unter Zwischenschaltung eines zweistufigen Untersetzungsgetriebes von dem vorhin erwähnten elektromechanischen Aktuator 7 angetrieben. Dabei sind Mittel zum Abdichten des Betriebsdruckraums 6 in der Bohrung des Bremsgehäuses 20, durch die der Schaft 17 ragt, vorgesehen. Die auf die Gewindespindel 2 übertragene Rotationsbewegung wird über die Kugeln 4, die sich im Gewindegang zwischen Gewindespindel 2 und Gewindemutter 3 befinden, auf die Gewindemutter 3 übertragen, die eine Translationsbewegung in Richtung der Achse A vollzieht. Dadurch wird auch der Bremskolben 5 betätigt, an dem sich die Gewindemutter 3 abstützt. Gleichzeitig wird die Gewindespindel 2 von einer Stufenbohrung 30 im Bremsgehäuse 20 aufgenommen und stützt sich über einen mit der Spindel 2 verbundenen Kragen 19 und ein Axiallager 18 am Bremsgehäuse 20 ab. Das Getriebe 1 setzt also die Drehbewegung des elektromechanischen Aktuators 7 in eine Linearbewegung um und ist für die Generierung der Zuspannkraft zur Durchführung eines Feststellbremsvorganges verantwortlich.

Beim Lösen der Feststellbremsvorrichtung wird der Elektromotor 7 entsprechend in der Gegenrichtung betrieben und die Gewindemutter 3 und damit auch der Bremskolben 5 vollziehen eine Bewegung in der Zeichnung nach rechts. Die Bremsbeläge 26, 27 sind nicht mehr mit der Bremsscheibe in Kontakt und der Feststellbremsvorgang ist beendet.

Der vorhin erwähnte Elektromotor 7 und das zweistufige Getriebe werden von einem zum Antriebsmodul 21 gehörenden Gehäuse 28 aufgenommen, das mit einem Gehäusedeckel 28a verschließbar ist. In der in Fig. 1 dargestellten Ausführungsform ist das zweistufige Getriebe als Schneckengetriebe 11, 12 ausgebildet. Schneckengetriebe sind eine Kategorie der Schraubwälzgetriebe, bei denen im Gegensatz zu den Wälzgetrieben auch ein Gleitanteil in der Bewegung vorhanden ist. Aufgebaut ist ein solches Schneckengetriebe aus einem schraubenförmig verzahnten Rad, einer Schnecke, und einem darin kämmenden schrägverzahnten Rad, dem Schneckenrad.

Die erste Getriebestufe, das heißt das erste Schneckengetriebe 11, ist eingangsseitig mit der Ausgangswelle 8 des Elektromotors 7 verbunden, während die zweite Getriebestufe, das heißt das zweite Schneckengetriebe 12, ausgangsseitig mit dem Schaft 17 bzw. mit dem Getriebe 1 bzw. 2, 3 verbunden ist. Wie es dargestellt ist, ist eine erste Schnecke 13 auf die Ausgangswelle 8 des Elektromotors 7 aufgesteckt und kämmt ein erstes Schneckenrad 14. Auf das Drehzentrum des ersten Schneckenrads 14 ist eine zweite Schnecke 15 aufgesteckt und wird von diesem in Rotation versetzt. Die zweite Schnecke 15 wiederum kämmt ein zweites Schneckenrad 16, das drehfest mit dem Schaft 17 verbunden ist und den Schaft 17 gemeinsam mit dem Getriebe 1 in Rotation versetzt und dabei eine translatorische Bewegung des Bremskolbens 5 erzeugt. Damit die auf diese Weise eingestellte Zuspannkraft während eines Feststellbremsvorganges erhalten bleibt, ist das zweite Schneckengetriebe 12 selbsthemmend ausgeführt.

Bei einer Betätigung des Getriebes 1 unter Last rollen die Wälzkörper 4 im Gewindegang ab. Dadurch wird ein verhältnismäßig hoher Wirkungsgrad von 85% bis 95% erreicht, bzw. bei Berücksichtigung der Reibungsverluste am Axiallager 18 75% bis 85%. Bei einem lastfreien Betätigen des Getriebes 1 rutschen die Wälzkörper 4 dagegen, d.h. bis der dem Bremskolben 5 zugeordnete Bremsbelag 27 an der nicht dargestellten Bremsscheibe anliegt, rutschen die Kugeln 4, weil es sich hierbei um eine nahezu lastfreie Betätigung handelt. Erst unter Last beginnen die Kugeln 4 zu wälzen bzw. abzurollen. Das Getriebe 1 wirkt also gleichzeitig als Nachstellung falls die Bremsbeläge 26, 27 verschlissen sind. Der Verzicht auf eine separate Nachstelleinrichtung bzw. die Integration von Nachstelleinrichtung und Betätigungseinrichtung in ein einziges Bauteil ist besonders kostengünstig und gleichzeitig robust. Damit das Abrollen der Wälzkörper 4 unter Last und das Rutschen bei lastfreier Betätigung des Getriebes 1 stets möglich ist, ist ein Schraubenfederelement 10 vorgesehen, das einen Wälzweg zum Abrollen der Wälzkörper 4 vorhält. Die Wälzkörper 4 sind zwischen zwei Anschlägen im Gewindegang begrenzt beweglich angeordnet, wobei das Schraubenfederelement 10 zum Vorhalten einer Wälzweges für die Wälzkörper 4 zwischen den Wälzkörpern 4 und einem ersten Anschlag angeordnet ist. Der erste Anschlag ist als taschenförmige Vertiefungen 23 ausgebildet und setzt sich ausgehend vom Gewindegang der Gewindemutter 3 tangential fort. Die taschenförmige Vertiefung 23 endet in einer senkrechten Anschlagfläche 25, an der sich das Schraubenfederelement 10 abstützt, wie insbesondere die Fig. 2 illustriert. Ein zweites Schraubenfederelement ist zwischen den Wälzkörpern 4 und dem anderen Anschlag, also der anderen taschenförmigen Vertiefung 24 angeordnet und dient als sogenannte Vordruckschraubenfeder. Diese Vordruckschraubenfeder stützt sich in der zweiten taschenförmigen Vertiefung 24 ab.

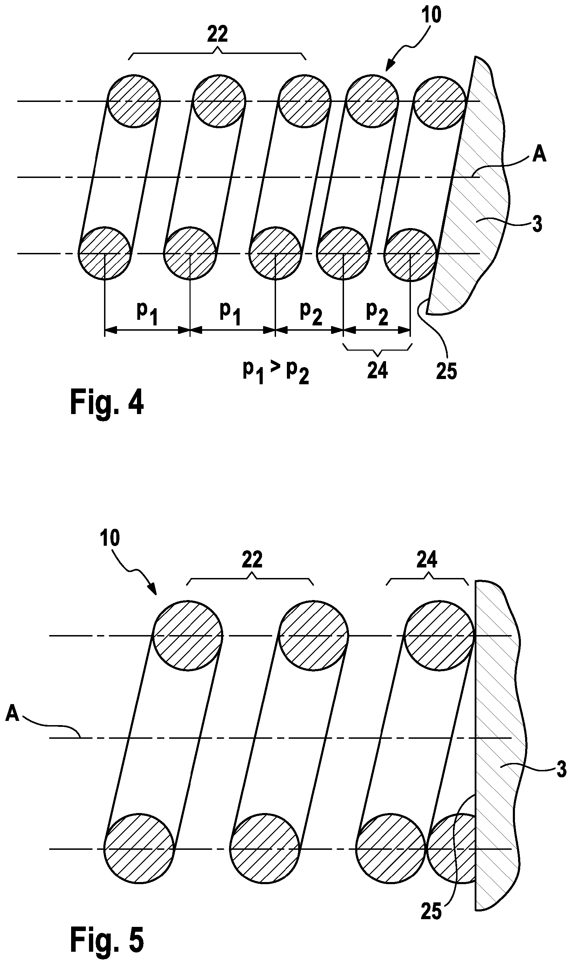

Im Folgenden werden Merkmale, Besonderheiten sowie Komponenten eines neuen Wälzkörpergetriebesystems mit einem doppelt gewendelten Federelement 10 anhand der Figuren 3-7 im Einzelnen näher erläutert. Dabei können diese Merkmale sämtlicher Ausführungsformen einzeln oder auch in beliebiger Kombination miteinander in einem Produkt vorgesehen sein, ohne den Grundgedanken der Erfindung zu verlassen.

Nach den Figuren 3-7 umfasst das abschnittsweise unterschiedlich gestaltete Schraubenfederelement vom Doppelwendeltyp einen Mittelabschnitt 22 und einen Anlageabschnitt 24. Dabei sind im Getriebegewindegang Mittel vorgesehen, welche die elastisch-nachgiebige Anpassung der Schraubenfeder an den schraubenförmig gewundenen Gewindegang im Wesentlichen nicht behindern, und wobei zusätzlich an wenigstens einem Ende(Anlageabschnitt 24) vom Schraubenfederelement 10 die Mittel vorgesehen, die im Vergleich zum Mittelabschnitt 22, eine erhöhte Quersteifigkeit in Relation zur Federachse A aufweisen oder die erhöhte Quersteifigkeit aufprägen.

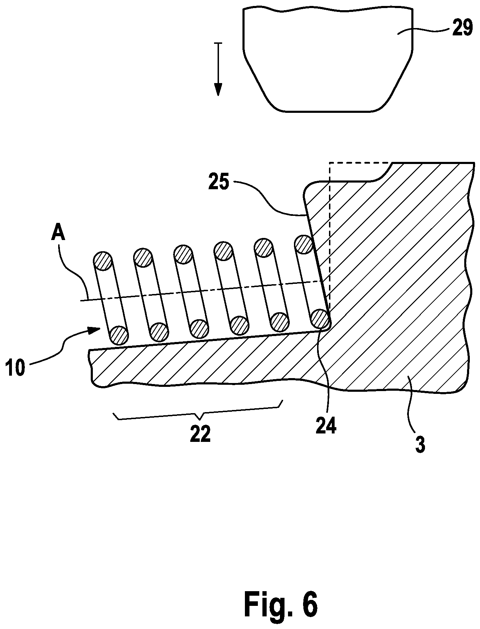

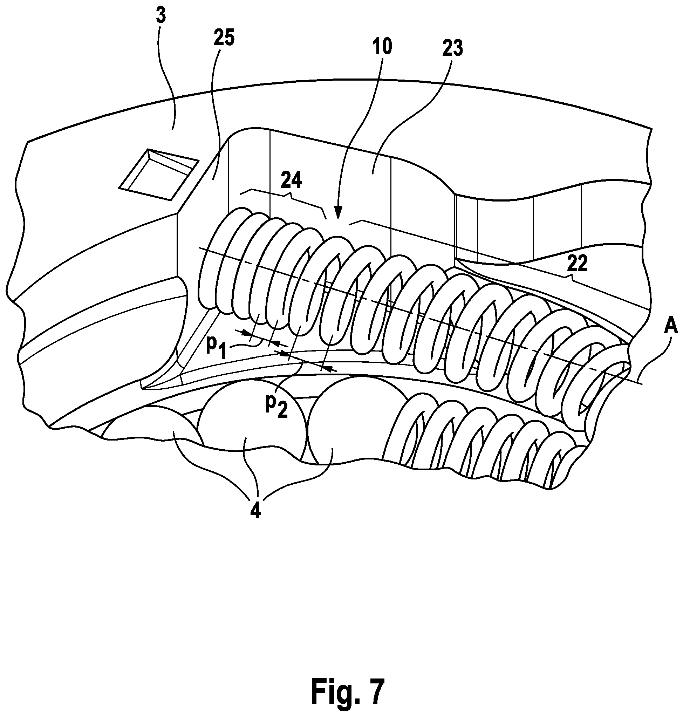

Eine bevorzugte Variante der Erfindung besteht in einer doppeltgewendelten Schraubenfeder und wobei der Schraubenfederanlageabschnitt 24 Windungen aufweist, die mit wenigstens zwei unterschiedlich ausgebildeten Schraubenfedersteigungen p1 und p2 ausgerüstet sind. Insbesondere können mehrere Schraubenfederwindungen vom Schraubenfederanlageabschnitt 24 mit reduzierter Steigung p2 insbesondere auf Block, also ohne oder zumindest mit wenig Abstand zueinander, gewickelt sein, während die daran anschließenden Schraubenfederwindungen eine erhöhte Steigung p1 aufweisen. Durch diese Maßnahmen wird im Gewindegang vom Kugelgewindegetriebe eine Reduktion der Quersteifigkeit für eine gute Anpassung der Feder an den Gewindegangverlauf erzielt. Demgegenüber ist der Anlageabschnitt 24 der Feder in seiner Quersteifigkeit verstärkt oder wird bewusst in eine günstige Richtung ausgelenkt. Die Einbausituation ist aus der Fig. 7 ersichtlich. Dadurch wird es vermieden, dass der Anlageabschnitt 24 aus der Vertiefung 23 der Gewindemutter 3 herausspringen kann. Eine besonders günstige, zentrische Krafteinleitung in das Federelement 10 wird erzielt, wenn ein letzter Gewindegang von dem Federelement 10 so angeschliffen ist, dass dieser glatt auf seiner mutterseitigen Anschlagfläche 25 aufsitzt. Alternativ oder zusätzlich-kombinatorisch ist es auch möglich der letzten Schraubenfederwindung mutterseitig eine bewusst geneigte Anschlagfläche 25 zuzuordnen, welche beispielsweise durch spanlose Umformung mittels Werkzeugstempel 29 (siehe Fig. 6) oder Zerspanung der Anschlagfläche 25 erhalten werden kann. Die Neigung dieser Anschlagfläche 25 kann also bewusst so im Raum geneigt angeordnet sein, dass Achse A der Schraubenfeder in eine günstige Richtung ausgelenkt wird. Mit anderen Worten ist es denkbar, die Krafteinleitung am Anlageabschnitt 24 so zu gestalten, dass das Federelement 10 insbesondere an benachbarte Komponenten (bspw. Gewindegang von Gewindespindel 2 oder Gewindemutter 3) angelegt wird. Weiterhin vorzugsweise kann dem Federelement 10 neben dem eigenen Einfachwendel zusätzlich die Wendelform des Kugelgewindegetriebegangs plastisch überlagert aufgeprägt sein. Dadurch kann unerwünschte Reibung zwischen Getriebegewindegang und Federelement 10 verhindert oder reduziert werden.

## Patentansprüche

1. Kombinierte Fahrzeugbremse mit einem Kugelgewindegetriebe, die eine hydraulisch betätigbare Betriebsbremse und eine elektromechanisch betätigbare Feststellbremsvorrichtung aufweist, wobei in einem Bremsgehäuse (20) ein hydraulischer Betriebsdruckraum (6) von einem Bremskolben (5) begrenzt ist, der zur Durchführung von Betriebsbremsungen mit hydraulischem Druckmittel beaufschlagbar ist, so dass der Bremskolben (5) zur Erzielung einer Bremswirkung entlang einer Kolbenlängsachse (A) betätigbar ist, und wobei die Feststellbremsvorrichtung auf den Bremskolben (5) mittels eines Getriebes (1) wirkt, indem das Getriebe (1) die Rotationsbewegung eines elektromechanischen Aktuators (7) in eine Translationsbewegung umsetzt und eine Betätigung des Bremskolbens (5) zur Durchführung von Feststellbremsvorgängen bewirkt und in der betätigten Stellung hält, wobei das Getriebe (1) eine Gewindespindel (2) und eine Gewindemutter (3) aufweist, die über mehrere Wälzkörper (4) miteinander in Kontakt stehen, wobei ein Federelement (10) vorgesehen ist, das bei einem lastfreien Betätigen des Getriebes (1) ein Rutschen der Wälzkörper (4) ermöglicht und bei einem Betätigen des Getriebes (1) unter Last ein Abrollen der Wälzkörper (4) bewirkt, **dadurch gekennzeichnet, dass** ein abschnittsweise unterschiedlich ausgebildetes Schraubenfederelement (10) vorgesehen ist, indem in einem Mittelabschnitt (22), also im Getriebegewindegang, Mittel vorgesehen sind, welche die elastisch-nachgiebige Anpassung vom Federelement (10) an den schraubenförmig gewundenen Getriebegewindegang im Wesentlichen nicht behindern, und wobei zusätzlich an wenigstens einem Ende vom Federelement (10) ein Anlageabschnitt (24) vorgesehen ist, der im Vergleich zum Mittelabschnitt (22), eine erhöhte Quersteifigkeit aufweist oder aufgeprägt erhält.

2. Kombinierte Fahrzeugbremse nach Anspruch 1 , **dadurch gekennzeichnet, dass** der Anlageabschnitt (24) Schraubenfederwindungen aufweist, die nebeneinander wenigstens zwei zueinander unterschiedlich ausgebildete Schraubenfedersteigungen p1, p2 aufweisen.

3. Kombinierte Fahrzeugbremse nach Anspruch 2, **dadurch gekennzeichnet, dass** mehrere Schraubenfederwindungen mit reduzierter Schraubenfedersteigung p2, insbesondere auf Block, also ohne oder zumindest mit wenig Abstand zueinander, gewickelt sind, während daran anschließende Schraubenfederwindungen eine erhöhte Schraubenfedersteigung p1 aufweisen.

4. Kombinierte Fahrzeugbremse nach einem oder mehreren der vorhergehenden Ansprüche, **dadurch gekennzeichnet, dass** ein letzter Gewindegang am Anlageabschnitt (24) rechtwinklig zu einer Federmittelachse A angeschliffen ist, so dass eine zentrische Krafteinleitung und Abstützung an einer Anschlagfläche (25) ermöglicht ist.

5. Kombinierte Fahrzeugbremse nach einem oder mehreren der vorhergehenden Ansprüche, **dadurch gekennzeichnet, dass** eine in Relation zu einer Federmittelachse A schiefwinklig geneigte Anschlagfläche (25) vorgesehen ist.

6. Kombinierte Fahrzeugbremse nach einem oder mehreren der vorhergehenden Ansprüche, **dadurch gekennzeichnet, dass** das Federelement (10) eine plastisch ausgeformte Doppelwendelform aufweist.

7. Kombinierte Fahrzeugbremse nach einem oder mehreren der vorhergehenden Ansprüche 3 bis 6, **dadurch gekennzeichnet, dass** eine Steigung vom Getriebegewindegang im Vergleich zu der Schraubenfedersteigung p1 unterschiedlich, insbesondere größer, ausgebildet ist.

## Claims

1. Combined vehicle brake with a ball screw drive, comprising a hydraulically actuated operating brake and an electromechanically actuated parking brake device, wherein a hydraulic operating pressure chamber (6) in a brake housing (20) is bounded by a brake piston (5) that is acted upon by a hydraulic pressure medium for performing operating braking so that the brake piston (5) can be actuated along a piston longitudinal axis (A) to achieve a braking effect, and wherein the parking brake device acts on the brake piston (5) by means of a gearbox (1), whereby the gearbox (1) converts the rotational movement of an electromechanical actuator (7) into a translational movement and causes operation of the brake piston (5) for performing parking brake processes and holds it in the operated position, wherein the gearbox (1) comprises a threaded spindle (2) and a threaded nut (3) that are in contact with each other by means of a plurality of roller bodies (4), wherein a spring element (10) is provided that enables sliding of the roller bodies (4) in the event of a no-load operation of the gearbox (1) and causes rolling of the roller bodies (4) in the event of the operation of the gearbox (1) under load, **characterized in that** a coil spring element (10) with segments of different forms is provided, whereby in a central segment (22), i.e. in the gearbox thread, means are provided that do not significantly hinder the elastically yielding adaptation of the spring element (10) to the helically wound gearbox thread, and wherein in addition a contact segment (24) is provided on at least one end of the spring element (10) that has increased lateral rigidity compared to the central segment (22), or has increased lateral rigidity imparted thereto.

2. Combined vehicle brake according to Claim 1, **characterized in that** the contact segment (24) comprises coil spring windings having at least two mutually differently formed adjacent coil spring pitches p1, p2.

3. Combined vehicle brake according to Claim 2, **characterized in that** a plurality of coil spring windings with reduced coil spring pitch p2 is wound, in particular in a block, i.e. with no or at least with little distance between them, whereas coil spring windings connecting thereto comprise an increased coil spring pitch p1.

4. Combined vehicle brake according to any one or more of the preceding claims, **characterized in that** a final winding on the contact segment (24) is ground off at right angles to a central spring axis A so that central force introduction and support on a stop surface (25) are enabled.

5. Combined vehicle brake according to any one or more of the preceding claims, **characterized in that** a stop surface (25) that is inclined at an oblique angle in relation to a central spring axis A is provided.

6. Combined vehicle brake according to any one or more of the preceding claims, **characterized in that** the spring element (10) comprises a malleably shaped double helix.

7. Combined vehicle brake according to any one or more of the preceding claims 3 to 6, **characterized in that** a pitch of the gearbox thread is of a different form compared to the pitch p1 of the coil spring, being in particular greater.

## Revendications

1. Frein de véhicule combiné comprenant un mécanisme de vis à billes, qui présente un frein de service à commande hydraulique et un dispositif de frein de stationnement à commande électromécanique, un espace de pression de service hydraulique (6) dans un boîtier de frein (20) étant limité par un piston de frein (5) qui peut être sollicité avec du fluide sous pression hydraulique pour effectuer des freinages de service, de telle sorte que le piston de frein (5) puisse être actionné le long d'un axe longitudinal de piston (A) pour réaliser un effet de freinage, et le dispositif de frein de stationnement agissant sur le piston de frein (5) au moyen d'un mécanisme (1), par le fait que le mécanisme (1) convertit le mouvement de rotation d'un actionneur électromécanique (7) en un mouvement de translation et provoque un actionnement du piston de frein (5) pour effectuer des opérations de freinage de stationnement et le maintient dans la position actionnée, le mécanisme (1) présentant une broche filetée (2) et un écrou de broche (3) qui sont en contact l'un avec l'autre par le biais de plusieurs corps de roulement (4), un élément de ressort (10) étant prévu, lequel, dans le cas d'un actionnement sans charge du mécanisme (1), permet un glissement des corps de roulement (4), et dans le cas d'un actionnement du mécanisme (1) sous charge, provoque un roulement des corps de roulement (4), **caractérisé en ce qu'**il est prévu un élément de ressort hélicoïdal (10) réalisé en partie différemment, par le fait que dans une portion centrale (22), c'est-à-dire dans le filetage du mécanisme, des moyens sont prévus, lesquels ne gênent essentiellement pas l'adaptation élastique flexible de l'élément de ressort (10) au filetage du mécanisme enroulé en hélice et en outre, au niveau d'au moins une extrémité de l'élément de ressort (10), une portion d'appui (24) étant prévue, laquelle par comparaison avec la portion centrale (22), présente ou acquiert de manière marquée une plus grande rigidité transversale.

2. Frein de véhicule combiné selon la revendication 1, **caractérisé en ce que** la portion d'appui (24) présente des enroulements de ressort hélicoïdal qui présentent les uns à côté des autres au moins deux pas de ressort hélicoïdal p1, p2 réalisés différemment l'un de l'autre.

3. Frein de véhicule combiné selon la revendication 2, **caractérisé en ce que** plusieurs enroulements de ressort hélicoïdal sont enroulés avec des pas de ressort hélicoïdal réduits p2, en particulier en bloc, c'est-à-dire sans espacement ou avec seulement un faible espacement les uns des autres, tandis que des enroulements de ressort hélicoïdal s'y raccordant présentent un plus grand pas de ressort hélicoïdal p1.

4. Frein de véhicule combiné selon l'une ou plusieurs des revendications précédentes, **caractérisé en ce qu'**un dernier filetage au niveau de la portion d'appui (24) est biseauté à angle droit par rapport à un axe médian de ressort A de telle sorte qu'une introduction de force centrale et qu'un appui contre une surface de butée (25) soient possibles.

5. Frein de véhicule combiné selon l'une ou plusieurs des revendications précédentes, **caractérisé en ce qu'**il est prévu une surface de butée (25) inclinée suivant un angle oblique par rapport à un axe médian de ressort A.

6. Frein de véhicule combiné selon l'une ou plusieurs des revendications précédentes, **caractérisé en ce que** l'élément de ressort (10) présente une forme en double hélice formée plastiquement.

7. Frein de véhicule combiné selon l'une ou plusieurs des revendications précédentes 3 à 6, **caractérisé en ce qu'**un pas de filetage du mécanisme est différent, notamment est plus important, par comparaison avec le pas du ressort hélicoïdal p1.
